**Europäisches Patentamt**

(19) **European Patent Office**

**Office européen des brevets**

(11) Numéro de publication : **0 207 043 B1**

(12) **FASCICULE DE BREVET EUROPEEN**

(45) Date de publication du fascicule du brevet :
15.05.91 Bulletin 91/20

(21) Numéro de dépôt : **86870083.2**

(22) Date de dépôt : **10.06.86**

(51) Int. Cl.⁵ : **C03C 17/02, B67B 5/00**

(54) **Procédé de traitement du verre, pour éviter son ressuage, et verre traité suivant ce procédé.**

(30) Priorité : **18.06.85 BE 215209**

(43) Date de publication de la demande :
**30.12.86 Bulletin 86/52**

(45) Mention de la délivrance du brevet :
**15.05.91 Bulletin 91/20**

(84) Etats contractants désignés :
**DE FR GB IT**

(56) Documents cités :
**DE-C- 3 344 958**
**FR-A- 2 338 907**
**US-A- 4 311 247**
**US-A- 4 396 655**

(73) Titulaire : **NOUVELLES VERRERIES DE MOMIGNIES Société Anonyme**
**rue Mandenne**
**B-6590 Momignies (BE)**

(72) Inventeur : **Stockebrand, Jo**
**260, rue Herreuse**
**B-6590 Momignies (BE)**

(74) Mandataire : **Vigneron, Jean**
**Cabinet VIGNERON 30 avenue Eugène Godaux**
**B-1150 Bruxelles (BE)**

# Description

La présente invention a pour objet un procédé de traitement du verre, pour éviter son ressuage, en particulier du verre opale, constituant un récipient dont l'ouverture doit être obturée hermétiquement par un opercule, tel qu'opercule en aluminium garni, au moins dans sa zone venant en contact avec le verre, d'une couche d'un polymère capable d'assurer l'adhérence dudit opercule au verre, destiné à assurer la conservation du produit contenu dans le récipient.

On sait que certains verres, et en particulier le verre opale, utilisés notamment pour la fabrication de récipients destinés à contenir des produits de beauté rejettent une certaine quantité de soude, phénomène connu sous le nom de ressuage du verre, ce qui entraîne le défaut d'adhérence aux récipients des opercules obturant l'ouverture de ces derniers et destinés à conserver à l'abri de l'air, pour éviter leur détérioration par oxydation, les produits contenus dans ces récipients.

Pour remédier à ce grave inconvénient, on a déjà pensé à traiter le verre, pour éviter son ressuage, à l'aide d'un gaz, tel que le fréon. Toutefois, ce procédé est relativement délicat à mettre en oeuvre et en outre, il est particulièrement onéreux.

Pour éviter ce traitement du verre par le fréon, on a encore pensé à garnir les récipients, à l'endroit de leur ouverture, d'une collerette en matière plastique sur laquelle vient se placer l'opercule de fermeture du récipient. Cette façon de faire, si elle résout le problème de l'adhérence de l'opercule, présente toutefois l'inconvénient, d'une part, d'être également onéreuse compte tenu du coût de la collerette qui doit être adaptée à la forme de l'ouverture de chaque récipient et du placement de ladite collerette sur ce dernier et, d'autre part, de nuire à l'esthétique du récipient destiné à contenir des produits de luxe.

L'invention a pour but de remédier aux inconvénients précités et de procurer un procédé simple et efficace conservant au récipient en verre son aspect d'origine tout en permettant d'obtenir une adhérence parfaite et permanente de l'opercule obturant le récipient.

A cet effet, suivant l'invention, ledit procédé consiste à déposer, au moins sur la zone du récipient bordant l'ouverture de ce dernier et destinée à venir en contact avec l'opercule susdit, une couche continue d'émail céramique.

L'invention a également pour objet un récipient traité suivant le procédé susdit.

L'invention a aussi pour objet un procédé pour faire adhérer de manière permanente à un récipient en verre, un opercule, tel qu'opercule en aluminium garni, au moins dans sa zone venant en contact avec le verre, d'une couche d'un polymère capable d'assurer l'adhérence dudit opercule au verre.

Suivant l'invention, ce procédé consiste à chauffer l'aluminium de l'opercule, à l'endroit où il est revêtu de la couche de polymère susdite, à une température de l'ordre de 120°C et a appliquer ensuite ledit opercule sur le bord de l'ouverture du récipient garni d'émail céramique pour que la couche de polymère chauffée entre en contact avec ce bord, l'application de l'opercule s'effectuant sous pression régulièrement répartie sur toute la zone où la couche de polymère est en contact avec la couche d'émail céramique.

L'invention a enfin pour objet un récipient obturé suivant ce dernier procédé.

D'autres détails et particularités de l'invention ressortiront de la description des dessins annexés au présent mémoire et qui illustrent les procédés et récipients suivant l'invention.

Les figures 1 et 2 sont des vues en élévation et en coupe, avec brisure partielle, illustrant l'état antérieur de la technique.

La figure 3 est une vue analogue aux figures 1 et 2 illustrant les procédés et un récipient suivant l'invention.

Dans les différentes figures, les mêmes notations de référence désignent des éléments identiques ou analogues.

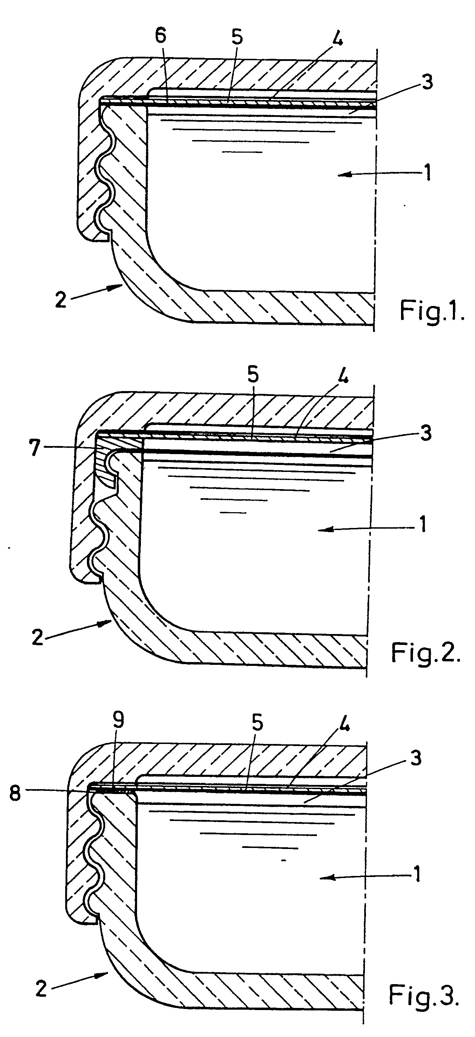

Comme montré à la figure 1, on a tout d'abord pensé, pour isoler de l'air le produit 1 contenu dans un récipient en verre 2, d'obturer l'ouverture 3 de ce récipient par un opercule 4 constitué d'une feuille d'aluminium 5 garnie, à l'endroit où elle vient en contact avec le verre, d'une couche de polymère 6, telle que celui connu sous la marque "SURLYN", destinée à assurer l'adhérence de l'opercule 4 au verre.

On a constaté, surtout lorsque le verre utilisé est un verre opalin, que l'adhérence de l'opercule au verre était de durée extrêmement limitée du fait du ressuage du verre, ce qui entraînait une perte considérable lors du stockage des produits à conserver à l'abri de l'air et de ce fait rendait le verre et surtout le verre opalin impropre pour la fabrication de récipients pour ce type de produits.

Une solution existante pour résoudre ce problème consiste à traiter le verre au fréon pour réduire le ressuage. Cette solution trop coûteuse a conduit à une autre solution, illustrée à la figure 2, qui consiste à garnir le récipient 2, à proximité de son ouverture 3, d'une collerette 7 en matière plastique sur laquelle vient se fixer l'opercule 4.

La solution proposée par l'invention et illustrée à la figure 3 consiste à déposer, au moins sur la zone 8 du récipient bordant l'ouverture 3 de ce dernier, une couche continue 9 d'émail céramique qui adhère naturellement au verre et notamment au verre opalin. Suivant l'invention, cette couche 9 est déposée par enduisage, tel qu'enduisage au rouleau, à la température ambiante et est soumise ensuite à un recuit à une température comprise entre 500 et 600°C.

Pour faire adhérer l'opercule 4 au récipient muni de la couche 9 d'émail céramique, on chauffe, suivant l'invention, l'aluminium de l'opercule 4, à l'endroit où il est revêtu de la couche de polymère 6, à une température de l'ordre de 120°C et on applique ensuite cet opercule 4 sur le bord de l'ouverture 3 pour que ladite couche de polymère 6 chauffée, par l'intermédiaire de l'aluminium, entre en contact avec ce bord garni de la couche 9 d'émail céramique, l'application dudit opercule 4 s'effectuant sous pression régulièrement répartie sur toute la zone où la couche de polymère est en contact avec la couche 9 d'émail céramique.

## Revendications

1. Procédé de traitement du verre, pour éviter son ressuage, en particulier du verre opale, constituant un récipient (2) dont l'ouverture (3) doit être obturée hermétiquement par un opercule, tel qu'opercule (4) en aluminium garni, au moins dans sa zone venant en contact avec le verre, d'une couche (6) d'un polymère capable d'assurer l'adhérence dudit opercule au verre, destiné à assurer la conservation du produit (1) contenu dans le récipient, ledit procédé étant caractérisé en ce qu'il consiste à déposer, au moins sur la zone (8) du récipient bordant l'ouverture (3) de ce dernier et destinée à venir en contact avec l'opercule (4) susdit, une couche continue (9) d'émail céramique.

2. Procédé de traitement du verre suivant la revendication 1, caractérisé en ce que la couche continue (9) d'émail céramique est déposée par enduisage, tel qu'enduisage au rouleau.

3. Procédé de traitement du verre suivant l'une ou l'autre des revendications 1 et 2, caractérisé en ce que l'émail céramique est déposé sur le verre à la température ambiante.

4. Procédé de traitement du verre suivant l'une quelconque des revendications 1 à 3, caractérisé en ce que la couche d'émail céramique (9) déposée sur le verre est soumise à un recuit à une température comprise entre 500° et 600°C.

5. Récipient en verre, en particulier en verre opale, traité, pour éviter le ressuage du verre, par un procédé conforme à l'une quelconque des revendications 1 à 4.

6. Procédé pour faire adhérer de manière permanente à un récipient en verre (2), traité par le procédé suivant l'une quelconque des revendications 1 à 4, un opercule (4), tel qu'opercule en aluminium garni, au moins dans sa zone venant en contact avec le verre, d'une couche (6) d'un polymère capable d'assurer l'adhérence dudit opercule au verre, caractérisé en ce qu'il consiste à chauffer l'aluminium (5) de l'opercule (4), à l'endroit où il est revêtu de la couche de polymère (6), à une température de l'ordre de 120°C et à appliquer ensuite ledit opercule (4) sur le bord de l'ouverture (3) du récipient (2) garni de la couche (9) d'émail céramique pour que la couche de polymère (6) chauffée entre en contact avec ce bord, l'application de l'opercule (4) s'effectuant sous pression régulièrement répartie sur toute la zone où la couche de polymère (6) est en contact avec la couche (9) d'émail céramique.

7. Récipient en verre, en particulier en verre opale, traité, pour éviter le ressuage du verre, par un procédé conforme à l'une quelconque des revendications 1 à 4 et garni d'un opercule (4) à l'aide du procédé suivant la revendication 6.

## Ansprüche

1. Verfahren zur Behandlung von Glas, insbesondere Opalglas, um dessen Ausseigern zu verhindern, bestehend aus einem Behältnis (2), dessen Öffnung (3) mittels einer Membrane, wie z.B. einer Aluminiummembrane (4) hermetisch verschlossen werden soll, die zumindest in dem Bereich, in dem sie mit dem Glas in Berührung kommt, mit einer Schicht (6) aus einem die Adhärenz der genannten Membrane am Glas gewährleistenden Polymer versehen ist und die dazu bestimmt ist, die Konservierung des sich im Behältnis befindlichen Produkts (1) sicherzustellen, wobei das Verfahren dadurch gekennzeichnet ist, daß zumindest im Bereich (8) des Behältnisses, der den Rand der Öffnung (3) desselben darstellt und in Berührung mit vorgerannter Membrane (4) kommt, eine durchgehende Schicht (9) Keramikschmelz aufgetragen wird.

2. Verfahren zur Behandlung von Glas gemäß Anpruch 1, dadurch gekennzeichnet, daß die durchgehende Schicht (9) Keramikschmelz mittels Bestreichung, wie z.B. Rollenbestreichung aufgetragen wird.

3. Verfahren zur Behandlung von Glas gemäß Anspruch 1 oder 2, dadurch gekennzeichnet, daß der Keramikschmelzbei Umgebungstemperatur auf das Glas aufgetragen wird.

4. Verfahren zur Behandlung von Glas gemäß irgendeinem der Ansprüche 1 bis 3, dadurch gekennzeichret, daß die auf das Glas aufgetragene Schicht Keramikschmelz einem Glühvorgang bei einer Temperatur zwischen 500 und 600°C unterzogen wird.

5. Behältnis aus Glas, insbesondere Opalglas, betandelt mittels eines Verfahrens gemäß irgendeinem der Ansprüche 1 bis 4, um das Ausseigern des Glases zu verhindern.

6. Verfahren zur permamenten Anhaftung einer Membrane (4) an einem Glasbehältnis (2), behandelt mittels eines Verfahrens gemäß irgendeinem der Ansprüche 1 bis 4, wie z.B. einer Aluminiummembrane, die zumindest in dem Bereich, in dem sie mit dem Glas in Berührung kommt, mit einer Schicht (6) aus einem die Adhärenz der genannten Membrane am Glas gewährleistenden Polymer versehen ist, dadurch gekennzeichnet, daß das Aluminium (5) der Membrane (4) an der Stelle, an der es mit der Polymerschicht (6) versehen ist, auf eine Temperatur von ca. 120°C erwärmt wird und daß dann die genannte Membrane (4) auf der Rand der Öffnung (3) des mit der Schicht (9) Keramikschmelz versehenen Behältnisses (2) aufgebracht wird, damit die erhitzte Polymer-Schicht (6) in Verbindung mit diesem Rand gelangt, wobei das Aufbringen der Membrane (4) unter gleichmäßig auf den ganzen Bereich aufgeteiltem Druck erfolgt, in dem sich die Polymer-Schicht (6) mit der Schicht (9) Keramik-Schmelz in Berührung befindet.

7. Behältnis aus Glas, insbesondere Opalglas, behandelt mittels eines Verfahrens gemäß irgendeinem der Ansprüche 1 bis 4, um das Ausseigern des Glases zu vermeiden, und versehen mit einer mittels des Verfahrens gemäß Anspruch 6 aufgebrachten Membrane (4).

the lid (4) occurring under a pressure which is uniformly distributed over all that area where the polymer layer (6) contacts the ceramic enamel layer (9).

7. Glass container, particularly opal glass container, treated to prevent glass sweating, by a process according to any of claims 1 to 4 and fitted with a lid (4) by means of the process according to claim 6.

## Claims

1. Method for treating glass, to prevent sweating thereof, particularly opal glass, forming a container (2) the opening (3) of which has to be sealingly closed by a lid, such as a lid (4) made of aluminium, lined at least in that area thereof contacting the glass, with a layer (6) of a polymer able to ensure adherence of said lid to the glass, intended to ensure the preserving of the product (1) contained inside said container, this method being characterized in that it comprises laying a continuous layer (9) of ceramic enamel at least over that container area (8) bounding the opening (3) thereof and which will contact said lid (4).

2. Method for treating glass according to claim 1, characterized in that the continous ceramic enamel layer (9) is laid by coating, such as roller coating.

3. Method for treating glass according to either of claims 1 or 2, characterized in that the ceramic enamel is laid over the glass at room temperature.

4. Method for treating glass according to any of claims 1 to 3, characterized in that said ceramic enamel layer (9) lais over the glass is subjected to annealing at a temperature between 500° and 600°C.

5. Glass container, particularly opal glass container, treated to prevent glass sweating, by a method according to any of claims 1 to 4.

6. Method for permanently adhering a lid (4) to a glass container (2) treated by the process according to any of claims 1 to 4, such as an aluminium lid lined at least in that area thereof contacting the glass, with a layer (6) of a polymer able to ensure said lid adhering to the glass, characterized in that it comprises heating the aluminium (5) of the lid (4) in that area where it is lined with said polymer layer (6), to a temperature of about 120°, and applying thereafter said lid (4) on the rim of the opening (3) of the container (2) coated with ceramic enamel layer (9), in order that the heated polymer layer (6) contacts said rim, applying

Fig.1.

Fig.2.

Fig.3.